# EUROPEAN PATENT APPLICATION

(11) **EP 4 415 103 A1**
(43) Date of publication of application: **14.08.2024**
(21) Application number: 22946050.6
(22) Date of filing: 30.12.2022
(51) Int. Cl.: H01M 10/0569

(54) **BATTERY, BATTERY PACK AND ELECTRIC DEVICE**

(30) Priority: 08.10.2022 CN 202211237137
(71) Applicant: Xiamen Hithium Energy Storage Technology Co., Ltd., Xiamen, Fujian 361100 (CN)
(72) Inventor: ZHOU, Wenyang, Xiamen, Fujian 361100 (CN)
(74) Representative: Mewburn Ellis LLP
(86) International application number: PCT/CN2022/143994
(87) International publication number: WO 2024/073960

(57) **Abstract**

A cell, a battery pack, and an electricity-consumption device are provided in the disclosure. The cell includes an electrolyte, a positive electrode sheet, a separator, and a negative electrode sheet. The electrolyte includes a cyclic organic solvent and a linear organic solvent. The electrolyte has a conductivity σ satisfying: σ = *k_{γ}* × *γ²* + *k_{viscosity}* × *µ₀* - *k_{conductivity},* where *γ* represents a mass ratio of the cyclic organic solvent to the linear organic solvent in the electrolyte, *k_{γ}* is a constant for *γ*, -3.1 ≤ *kγ* ≤ -2.5, *k_{viscosity}* represents a constant for a viscosity of the electrolyte, 4.6 ≤ *k_{γ}* ≤ 5.8, *k_{conductivity}* represents a correction coefficient for the conductivity of the electrolyte, 0.16 ≤ *k_{γ}* ≤ 0.39, and *µ₀* represents a viscosity of the electrolyte at 25°C. The positive electrode sheet is at least partially immersed in the electrolyte. The separator is located at a side of the positive electrode sheet and at least partially immersed in the electrolyte. The negative electrode sheet is disposed at a side of the separator away from the positive electrode sheet and at least partially immersed in the electrolyte. In the disclosure, the electrolyte has a relatively high flow speed during inj ection of the electrolyte and can well wet a positive-electrode active material layer and a negative-electrode active material layer.

## Description

### TECHNICAL FIELD

This disclosure relates to the field of cells, and in particular, to a cell, a battery pack, and an electricity-consumption device.

### BACKGROUND

With continuous development of technologies of lithium ion cells, the lithium ion cell has advantages such as a large specific capacitance, no memory effect, a high operating voltage, a high charging speed, a wide operating-temperature range, a long cycle life, a small volume, and a light weight compared with other types of cells such as lead-acid cells and nickel-cadmium cells. At present, the lithium ion cells are widely applicable in mobile phones, notebook computers, electric automobiles, energy-storage cabinets, and other fields, and have found increasingly wide utilization. A separator is provided between a positive electrode sheet and a negative electrode sheet of a cell, and a distance between the separator and the positive electrode sheet or a distance between the separator and the negative electrode sheet is relatively small. Therefore, during injection of an electrolyte into the cell, it is difficult for the electrolyte to flow down due to a surface tension between the electrolyte and the separator, a surface tension between the electrolyte and the positive electrode sheet, and a surface tension between the electrolyte and the negative electrode sheet, and thus the efficiency of injection of the electrolyte into the cell is reduced. In addition, since the electrolyte is difficult to flow down, wetting of the positive electrode sheet and the negative electrode sheet may be slowed, and thus when injection of the electrolyte is completed and pressure is removed, a liquid level of the electrolyte is relatively close to an opening of a liquid-injection hole, which may in turn lead to spraying and spillage of the electrolyte.

### SUMMARY

In view of the above problems, a cell is provided in embodiments of the disclosure. Electrolyte in the cell has a relatively low viscosity and can flow down quickly during injection of the electrolyte, and thus spraying and spillage of the electrolyte can be avoided when injection of the electrolyte is completed, wetting of a positive-electrode active material layer and a negative-electrode active material layer by the electrolyte may be improved, and stability of a solid electrolyte interface (SEI) film may be enhanced.

In a first aspect, a cell is provided in embodiments of the disclosure. The cell includes an electrolyte, a positive electrode sheet, a separator, and a negative electrode sheet. The electrolyte includes a cyclic organic solvent and a linear organic solvent. The electrolyte has a conductivity σ satisfying: σ = *k_{γ}* × *γ²* + *k_{viscosity}* × *µ₀* - *k_{conductivity},* where *γ* represents a mass ratio of the cyclic organic solvent to the linear organic solvent in the electrolyte, *k_{γ}* is a constant for *γ*, - 3.1 ≤ *k_{γ}* ≤ -2.5, *k_{viscosity}* represents a constant for a viscosity of the electrolyte, 4.6 ≤ *k_{γ}* ≤ 5.8, *k_{conductivity}* represents a correction coefficient for the conductivity of the electrolyte, 0.16 ≤ *k_{γ}* ≤ 0.39, and *µ₀* represents a viscosity of the electrolyte at 25°C. The positive electrode sheet is at least partially immersed in the electrolyte. The separator is located at a side of the positive electrode sheet and at least partially immersed in the electrolyte. The negative electrode sheet is disposed at a side of the separator away from the positive electrode sheet and at least partially immersed in the electrolyte.

The conductivity σ of the electrolyte in the cell in embodiments of the disclosure satisfies: σ = *k_{γ}* × *γ²* + *k_{viscosity}* × *µ₀* - *k_{conductivity},* so that the electrolyte has a relatively low viscosity without concentration dilution (e.g., without dilution of concentration of a lithium salt). Therefore, during injection of the electrolyte into a liquid-injection hole of the cell, the electrolyte is subject to a relatively small resistance when flowing through the separator and the positive electrode sheet or through the separator and the negative electrode sheet, and thus the electrolyte can easily flow through the separator and the positive electrode sheet or through the separator and the negative electrode sheet, and accordingly the fall of the electrolyte can be speeded up during injection of the electrolyte. For each cell, a fixed amount of electrolyte is injected, and thus in the case where the electrolyte can flow down quickly, there is a relatively large distance between a liquid level of the electrolyte and an opening of the liquid-injection hole when injection of the electrolyte is completed, and accordingly spraying and spillage of the electrolyte can be avoided when injection of the electrolyte is completed and a liquid-injection pressure is removed. In addition, the electrolyte has a relatively low viscosity and thus is easier to enter pores of a positive-electrode active material layer of the positive electrode sheet and pores of a negative-electrode active material layer of the negative electrode sheet, thereby improving wetting of the positive-electrode active material layer and the negative-electrode active material layer by the electrolyte, and increasing a contract area between the electrolyte and the positive-electrode active material layer and a contract area between the electrolyte and the negative-electrode active material layer. In this case, the SEI film formed is more stable. In addition, a conductivity of the electrolyte may be increased while the low viscosity can be satisfied, thereby increasing a charging and discharging speed of the cell.

Furthermore, the viscosity *µ₀* of the electrolyte at 25°C satisfies: 1.9 mPa.s ≤ *µ₀* ≤ 4.5 mPa.s. In the case where the viscosity of the electrolyte at 25°C is in the range, the flow speed of the electrolyte may be increased, and thus spraying and spillage of the electrolyte may be avoided when injection of the electrolyte is completed, wetting of the positive-electrode active material layer and the negative-electrode active material layer may be improved, and the stability of the SEI film formed may be enhanced. It is difficult to form an electrolyte with a too low viscosity through using existing solvent, or an electrolyte with a too low viscosity can be only formed by means of increasing the amount of solvent to dilute electrolyte concentration (such as dilute concentration of a lithium salt), which may reduce a capacitance and a charging and discharging speed of the cell. In the case where the viscosity of the electrolyte is too high, the flow speed of the electrolyte during injection of the electrolyte may be adversely affected, and thus spraying and spillage of the electrolyte may easily occur when injection of the electrolyte is completed, wetting of the positive-electrode active material layer and the negative-electrode active material layer by the electrolyte may be weakened, and the contract area between the electrolyte and the positive-electrode active material layer and the contract area between the electrolyte and the negative-electrode active material layer may be reduced, which in turn reduces the stability of the SEI film.

Furthermore, the viscosity*µ₀* of the electrolyte at 25°C satisfies: 1.9 mPa.s ≤ *µ₀* ≤ 2.4 mPa.s. In the case where the viscosity of the electrolyte at 25°C is in the range, the flow speed of the electrolyte may be increased, and thus spraying and spillage of the electrolyte may be avoided when injection of the electrolyte is completed, wetting of the positive-electrode active material layer and the negative-electrode active material layer may be improved, and the stability of the SEI film formed may be enhanced. It is difficult to form an electrolyte with a too low viscosity through using existing solvent, or an electrolyte with a too low viscosity can be only formed by means of increasing the amount of solvent to dilute electrolyte concentration (such as dilute concentration of a lithium salt), which reduces a capacitance and a charging and discharging speed of the cell. In the case where the viscosity of the electrolyte is too high, the flow speed of the electrolyte during injection of the electrolyte may be adversely affected, and thus spraying and spillage of the electrolyte may easily occur when injection of the electrolyte is completed, wetting of the positive-electrode active material layer and the negative-electrode active material layer by the electrolyte may be weakened, and the contract area between the electrolyte and the positive-electrode active material layer and the contract area between the electrolyte and the negative-electrode active material layer may be reduced, which in turn reduces the stability of the SEI film.

Furthermore, the mass ratio *γ* of the cyclic organic solvent to the linear organic solvent satisfies: 0.05 ≤ *γ* ≤ 2. A higher content of the cyclic organic solvent leads to a higher viscosity of the electrolyte. In the case where the content of the cyclic organic solvent is too high and the content of the linear organic solvent is too low, the dynamic performance of the cell may be adversely affected. A higher content of the linear organic solvent is conducive to reduction in the viscosity of the electrolyte. In the case where the content of the linear organic solvent is too high, although the viscosity of the electrolyte is reduced, the conductivity of the electrolyte is too low due to a low dielectric constant of the linear organic solvent.

Furthermore, the mass ratio *γ* of the cyclic organic solvent to the linear organic solvent satisfies: 0.1 ≤ *γ* ≤ 1. In this case, without reduction in an electrolyte concentration in the electrolyte, the electrolyte may have a relatively low viscosity, a relatively good dynamic performance, and a relatively high conductivity.

Furthermore, a viscosity *µ_{T}* of the electrolyte satisfies: *µ_{T}* = (2.86 × 10⁻⁵ × *T*² - 0.0267 × *T +* 6.47) × *µ₀,* where *T* represents a thermodynamic temperature of the electrolyte, and *µ_{T}* represents a viscosity of the electrolyte at the thermodynamic temperature T. In the case where the viscosity of the electrolyte satisfies the formula, the conductivity of the electrolyte may be increased while the low viscosity can be satisfied, thereby increasing the charging and discharging speed of the cell.

Furthermore, the cyclic organic solvent includes at least one of ethylene carbonate (EC), propylene carbonate (PC), dioxolane (DOL), or tetramethylene sulfone (TMS). The linear organic solvent includes at least one of dimethyl carbonate (DMC), diethyl carbonate (DEC), ethyl methyl carbonate (EMC), ethyl acetate (EA), methyl acetate (MA), propyl propionate (PP), ethyl butyrate (EB), ethyl propionate (EP), 1,2-dimethoxyethane (DME), diglyme (DG), or adiponitrile (AND). By means of using these substances as the solvent, the electrolyte formed may have a relatively good low-temperature performance and also have a relatively low viscosity, and thus the flow speed of the electrolyte may be increased, wetting of the positive-electrode active material layer and the negative-electrode active material layer by the electrolyte may be improved, and the stability of the SEI film may be enhanced.

Furthermore, the electrolyte further includes a lithium salt and an additive. The additive includes at least one of vinylene carbonate (VC), fluoroethylene carbonate (FEC), 1,3-propanesultone, ethylene sulfate, trimethylsilyl (tris) phosphate, tris borate, methylene methyl disulfonate, vinylethylene carbonate, lithium bisoxalate borate, lithium difluorooxalate borate, or lithium difluorophosphate. The additive is beneficial to formation of an electrode protection film (such as a passive film (e.g., an SEI film) for a negative electrode and a passive film (e.g., a chemical-electrochemical interface (CEI) film) for a positive electrode), thereby avoiding thermal runaway and over-charging, and thus flame retardancy, capacitance balance, and the like may be achieved. For example, with FEC, a dense and continuous SEI film may be effectively generated at a negative electrode made of graphite, and thus a cycling performance of the cell 100 may be improved.

Furthermore, in the electrolyte, a molar content of the lithium salt ranges from 0.8 mol/L to 1.2 mol/L, and a mass fraction of the additive ranges from 1% to 8%. A too low concentration of the lithium salt may lead to a too low conductivity of an electrolyte obtained, thereby adversely affecting a charging and discharging speed and a capacitance of a cell manufactured. A too high concentration of the lithium salt may lead to a high cost for manufacturing the electrolyte and a too high viscosity of the electrolyte, thereby adversely affecting the flow speed of the electrolyte. In the case where the concentration of the lithium salt is excessively high, the lithium salt cannot be dissolved in the electrolyte, and the conductivity of the electrolyte may be decreased rather than increased.

In a second aspect, a battery pack is provided in embodiments of the disclosure. The battery pack includes a box and multiple cells in embodiments of the disclosure. The multiple cells are received in the box and electrically connected in series and/or in parallel.

In a third aspect, an electricity-consumption device is provided in embodiments of the disclosure. The electricity-consumption device includes an electricity-consumption device body and a cell in embodiments of the disclosure. The electricity-consumption device body includes a device positive electrode and a device negative electrode. A positive electrode sheet of the cell is electrically connected to the device positive electrode of the electricity-consumption device body. A negative electrode sheet of the cell is electrically connected to the device negative electrode of the electricity-consumption device body. The cell is configured to power the electricity-consumption device body.

### BRIEF DESCRIPTION OF THE DRAWINGS

In order to describe technical solutions in embodiments of the disclosure more clearly, the following will give a brief introduction to accompanying drawings required for describing embodiments. Apparently, the accompanying drawings hereinafter described merely illustrate some embodiments of the disclosure. Based on these drawings, those of ordinary skills in the art can also obtain other drawings without creative effort.
FIG. 1 is a schematic structural view of a cell in an embodiment of the disclosure.
FIG. 2 is a schematic cross-sectional view of a cell in an embodiment of the disclosure, taken along A-A direction in FIG. 1.
FIG. 3 is a schematic diagram illustrating cycling electrical performances of a cell manufactured with an electrolyte in embodiment 1 of the disclosure, a cell manufactured with an electrolyte in embodiment 2 of the disclosure, a cell manufactured with electrolyte in an embodiment 3 of the disclosure, and a cell manufactured with an electrolyte in comparative embodiment 1 of the disclosure.
FIG. 4 is a schematic structural view of a battery pack in an embodiment of the disclosure.
FIG. 5 is a schematic structural view of an electricity-consumption device in an embodiment of the disclosure in the case where an electricity-consumption device body and a cell are not assembled together.

Illustration of reference signs in the accompanying drawings:
100 - cell, 110 - positive electrode sheet, 130 - separator, 150 - negative electrode sheet, 120 - housing, 140 - negative-electrode cover plate, 160 - positive-electrode cover plate, 101 - receiving cavity, 200 - battery pack, 210 - box, 211 - accommodation cavity, 300 - electricity-consumption device, 310 - electricity-consumption device body, 311 - device positive electrode, 313 - device negative electrode.

### DETAILED DESCRIPTION

In order to facilitate better understanding of solution of the disclosure by those skilled in the art, the following will illustrate clearly and completely technical solutions of embodiments of the disclosure with reference to accompanying drawings of embodiments of the disclosure. Apparently, embodiments illustrated herein are merely some, rather than all, of the disclosure. Based on the embodiments of the disclosure, all other embodiments obtained by those of ordinary skill in the art without creative effort shall fall within the protection scope of the disclosure.

The terms "first", "second", and the like used in the specification, the claims, and the accompany drawings of the disclosure are used to distinguish different objects rather than describe a particular order. The terms "include", "comprise", and "have" as well as variations thereof are intended to cover non-exclusive inclusion. For example, a process, method, system, product, or apparatus including a series of steps or units is not limited to the listed steps or units, on the contrary, it can optionally include other steps or units that are not listed; alternatively, other steps or units inherent to the process, method, product, or device can be included either.

The following will illustrate technical solutions in embodiments of the disclosure with reference to the accompanying drawings.

It may be noted that, for convenience of illustration, the same reference sign of the accompanying drawings represents the same component in embodiments of the disclosure, and for sake of simplicity, detailed illustration of the same component is omitted in different embodiments.

With continuous development of technologies of lithium ion cells, the lithium ion cell has advantages such as a large specific capacitance, no memory effect, a high operating voltage, a high charging speed, a wide operating-temperature range, a long cycle life, a small volume, and a light weight compared with other types of cells such as lead-acid cells and nickel-cadmium cells. At present, the lithium ions cells are widely applicable in mobile phones, notebook computers, electric automobiles, energy-storage cabinets, and other fields, and have found increasingly wide utilization.

The cell includes a positive electrode sheet, a separator, and a negative electrode sheet arranged in sequence. A distance between the separator and the positive electrode sheet or a distance between the separator and the negative electrode sheet is relatively small, generally, the distance between the separator and the positive electrode sheet ranges from 0 to 10 µm, and the distance between the separator and the negative electrode sheets ranges from 0 to 20 µm. Therefore, during injection of an electrolyte into the cell, it is difficult for the electrolyte to flow down due to a surface tension between the electrolyte and the separator, a surface tension between the electrolyte and the positive electrode sheet, and a surface tension between the electrolyte and the negative electrode sheet, and thus the efficiency of injection of the electrolyte into the cell is reduced. In addition, since the electrolyte is difficult to flow down, wetting of the positive electrode sheet and the negative electrode sheet may be slowed, and thus when injection of the electrolyte is completed and pressure is removed, a liquid level of the electrolyte is relatively close to an opening of a liquid-injection hole, and accordingly spraying and spillage of the electrolyte may occur. Moreover, in the case where the electrolyte has a relatively high viscosity, the electrolyte is less likely to enter pores of active material layers on surfaces of electrode sheets (including the positive electrode sheet and the negative electrode sheet), and thus a contact area between the electrolyte and each of the active material layers is relatively small, which is not conducive to stability of a solid electrolyte interface SEI) film formed.

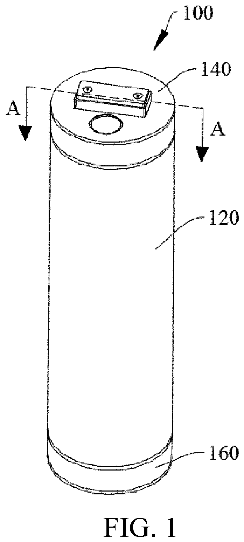

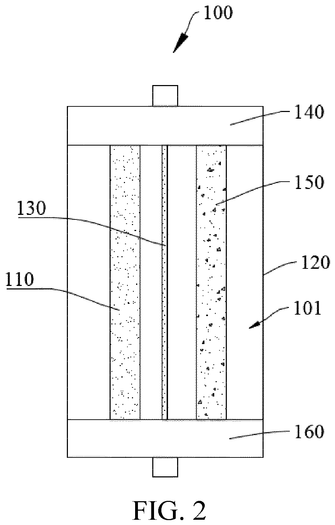

Referring to FIG. 1 and FIG. 2, a cell 100 is provided in embodiments of the disclosure. The cell 100 includes an electrolyte (not illustrated), a positive electrode sheet 110, a separator 130, and a negative electrode sheet 150. The positive electrode sheet 110 is at least partially immersed in the electrolyte and electrically connected to a positive electrode of an electricity-consumption device. The separator 130 is located at a side of the positive electrode sheet 110 and at least partially immersed in the electrolyte. The negative electrode sheet 150 is disposed at a side of the separator 130 away from the positive electrode sheet 110, at least partially immersed in the electrolyte, and electrically connected to a negative electrode of the electricity-consumption device. The electrolyte includes a cyclic organic solvent and a linear organic solvent. The electrolyte has a conductivity σ satisfying: σ = *k_{γ}* × *γ²* + *k_{viscosity}* × *µ₀ - k_{conductivity},* where *γ* represents a mass ratio of the cyclic organic solvent to the linear organic solvent in the electrolyte, *k_{γ}* is a constant for *γ*, -3.1 ≤ *k_{γ}* ≤ -2.5, *k_{viscosity}* represents a constant for a viscosity of the electrolyte, 4.6 ≤ *k_{γ} <* 5.8, *k_{conductivity}* represents a correction coefficient for the conductivity of the electrolyte, 0.16 ≤ *k_{γ}* ≤ 0.39, and *µ₀* represents a viscosity of the electrolyte at 25°C.

It may be understood that the positive electrode sheet 110, the separator 130, and the negative electrode sheet 150 are arranged in sequence. In an embodiment, the positive electrode sheet 110, the separator 130, and the negative electrode sheet 150 are stacked in sequence, the positive electrode sheet 110 is attached to the separator 130, and the separator 130 is attached to the negative electrode sheet 150. Alternatively, the positive electrode sheet 110, the separator 130, and the negative electrode sheet 150 are stacked in sequence, the positive electrode sheet 110 is spaced apart from the separator 130, and the separator 130 is spaced apart from the negative electrode sheet 150.

In a specific embodiment, the positive electrode sheet 110, the separator 130, and the negative electrode sheet 150 are stacked in sequence, and then the positive electrode sheet 110, the separator 130, and the negative electrode sheet 150 as a whole are wound or bent to adapt to a final shape of the cell 100. It may be understood that the cell 100 of the disclosure may be in a shape of a cylinder, a rectangle, etc. In the illustration of the disclosure, an example that the cell 100 is in a shape of a cylinder is taken for illustration, which may not be understood as a limitation to the cell 100 of the disclosure.

The cell 100 in embodiments of the disclosure may be, but is not limited to, a lithium-ion secondary cell 100, a lithium-ion primary cell 100, a lithium-sulfur cell 100, a sodium lithium-ion cell 100, a sodium-ion cell 100, or a magnesium-ion cell 100.

Optionally, the positive electrode sheet 110 includes a positive-electrode current collector (not illustrated) and a positive-electrode active material layer (not illustrated) covering a surface of the positive-electrode current collector. The positive-electrode current collector may be, but is not limited to, an aluminum sheet. Optionally, the negative electrode sheet 150 includes a negative-electrode current collector (not illustrated) and a negative-electrode active material layer (not illustrated) covering a surface of the negative-electrode current collector. The negative-electrode current collector may be, but is not limited to, a copper sheet.

Optionally, the separator 130 may be, but is not limited to, at least one of a polypropylene (PP) film or a polyethylene (PE) film.

Optionally, the conductivity σ of the electrolyte ranges from 9 ms/cm to 14 ms/cm. Specifically, the conductivity σ of the electrolyte may be, but is not limited to, 9 ms/cm, 9.5 ms/cm, 10 ms/cm, 10.5 ms/cm, 11 ms/cm, 11.5 ms/cm, 12 ms/cm, etc. In the case where the conductivity of the electrolyte is too low, an internal resistance of the cell may be increased, and polarization of the cell may be increased, and thus electrical performance of the cell may be attenuated. In the case where the conductivity of the electrolyte is too high, a solid-state cell may generate lithium dendrites.

The conductivity σ of the electrolyte in the cell 100 in embodiments of the disclosure satisfies: σ = *k_{γ}* × *γ²* + *k_{viscosity}* × *µ₀* - *k_{conductivity},* so that the electrolyte has a relatively low viscosity without concentration dilution (e.g., without dilution of concentration of a lithium salt). Therefore, during injection of the electrolyte into a liquid-injection hole of the cell 100, the electrolyte is subject to a relatively small resistance when flowing through the separator 130 and the positive electrode sheet 110 or through the separator 130 and the negative electrode sheet 150, and thus the electrolyte can easily flow through the separator 130 and the positive electrode sheet 110 or through the separator 130 and the negative electrode sheet 150, and accordingly the fall of the electrolyte can be speeded up during injection of the electrolyte. For each cell 100, a fixed amount of electrolyte is injected, and thus in the case where the electrolyte can flow down quickly, there is a relatively large distance between a liquid level of the electrolyte and an opening of the liquid-injection hole when injection of the electrolyte is completed, and accordingly spraying and spillage of the electrolyte can be avoided when injection of the electrolyte is completed and a liquid-injection pressure is removed. In addition, the electrolyte has a relatively low viscosity and thus is easier to enter pores of a positive-electrode active material layer of the positive electrode sheet 110 and pores of a negative-electrode active material layer of the negative electrode sheet 150, thereby improving wetting of the positive-electrode active material layer and the negative-electrode active material layer by the electrolyte, and increasing a contract area between the electrolyte and the positive-electrode active material layer and a contract area between the electrolyte and the negative-electrode active material layer. In this case, the SEI film formed is stable. In addition, a conductivity of the electrolyte may be increased while the low viscosity can be satisfied, thereby increasing a charging and discharging speed of the cell.

In some embodiments, the viscosity *µ₀* of the electrolyte at 25°C satisfies: 1.9 mPa.s ≤ *µ₀* ≤ 4.5 mPa.s. Specifically, the viscosity *µ₀* of the electrolyte may be, but is not limited to, 1.9 mPa.s, 2.0 mPa.s, 2.1 mPa.s, 2.2 mPa.s, 2.3 mPa.s, 2.4 mPa.s, 2.5 mPa.s, 2.6 mPa.s, 2.7 mPa.s, 2.8 mPa.s, 2.9 mPa.s, 3.0 mPa.s, 3.2 mPa.s, 3.4 mPa.s, 3.6 mPa.s, 3.8 mPa.s, 4.0 mPa.s, 4.2 mPa.s, 4.5 mPa.s, etc. In the disclosure, unless specified otherwise, a viscosity of the electrolyte refers to a viscosity of the electrolyte at a normal temperature (such as 25°C). In the case where the viscosity of the electrolyte is in the range, during injection of the electrolyte into the liquid-injection hole of the cell 100, the electrolyte is subject to a relatively small resistance when flowing through the separator 130 and the positive electrode sheet 110 or through the separator 130 and the negative electrode sheet 150, and thus the electrolyte can easily flow through the separator 130 and the positive electrode sheet 110 or through the separator 130 and the negative electrode sheet 150, and accordingly the fall of the electrolyte can be speeded up during injection of the electrolyte. For each cell 100, a fixed amount of electrolyte is injected, and thus in the case where the electrolyte can flow down quickly, there is a relatively large distance between a liquid level of the electrolyte and the opening of the liquid-injection hole when injection of the electrolyte is completed, and accordingly spraying and spillage of the electrolyte can be avoided when injection of the electrolyte is completed and a liquid-injection pressure is removed. In addition, the electrolyte has a relatively low viscosity and thus is easier to enter pores of a positive-electrode active material layer of the positive electrode sheet 110 and pores of a negative-electrode active material layer of the negative electrode sheet 150, thereby improving wetting of the positive-electrode active material layer and the negative-electrode active material layer by the electrolyte, and increasing a contract area between the electrolyte and the positive-electrode active material layer and a contract area between the electrolyte and the negative-electrode active material layer. In this case, the SEI film formed is stable.

Optionally, the viscosity of the electrolyte at -20°C ranges from 3.5 mPa.s to 5.4 mPa.s, and the viscosity of the electrolyte at 45°C ranges from 1.4 mPa.s to 3.2 mPa.s. In embodiments of the disclosure, unless specified otherwise, a value in a range from *a* to *b* means that the value may be any value between *a* and *b,* or may be *a* or *b.*

In some embodiments, the viscosity *µ₀* of the electrolyte at 25°C satisfies: 1.9 mPa.s ≤ *µ₀* ≤ 4.5 mPa.s. Optionally, the viscosity of the electrolyte at -20°C ranges from 3.5 mPa.s to 3.7 mPa.s, and the viscosity of the electrolyte at 45°C ranges from 1.4 mPa.s to 1.6 mPa.s. In the case where the viscosity of the electrolyte at 25°C is in the range, the flow speed of the electrolyte may be increased, and thus spraying and spillage of the electrolyte may be avoided when injection of the electrolyte is completed, wetting of the positive-electrode active material layer and the negative-electrode active material layer may be improved, and the stability of the SEI film formed may be enhanced. It is difficult to form an electrolyte with a too low viscosity through using existing solvent, or an electrolyte with a too low viscosity can be only formed by means of increasing the amount of solvent to dilute electrolyte concentration (such as dilute concentration of a lithium salt), which may reduce a capacitance and a charging and discharging speed of the cell 100. In the case where the viscosity of the electrolyte is too high, the flow speed of the electrolyte during injection of the electrolyte may be adversely affected, and thus spraying and spillage of the electrolyte may easily occur when injection of the electrolyte is completed, wetting of the positive-electrode active material layer and the negative-electrode active material layer by the electrolyte may be weakened, and the contract area between the electrolyte and the positive-electrode active material layer and the contract area between the electrolyte and the negative-electrode active material layer may be reduced, which in turn reduces the stability of the SEI film.

In some embodiments, the mass ratio *γ* of the cyclic organic solvent to the linear organic solvent satisfies: 0.05 ≤ *γ* ≤ 2. Specifically, the mass ratio of the cyclic organic solvent to the linear organic solvent may be, but is not limited to, 0.05, 0.08, 0.1, 0.12, 0.15, 0.18, 0.2, 0.3, 0.4, 0.5, 0.6, 0.7, 0.8, 0.9, 1.0, 1.2, 1.4, 1.6, 1.8, 2.0, etc. A higher content of the cyclic organic solvent leads to a higher viscosity of the electrolyte. In the case where the content of the cyclic organic solvent is too high and the content of the linear organic solvent is too low, the dynamic performance of the cell may be adversely affected. A higher content of the linear organic solvent is conducive to reduction in the viscosity of the electrolyte. In the case where the content of the linear organic solvent is too high, although the viscosity of the electrolyte is reduced, the conductivity of the electrolyte is too low due to a low dielectric constant of the linear organic solvent.

Furthermore, the mass ratio *γ* of the cyclic organic solvent to the linear organic solvent satisfies: 0.1 ≤ *γ* ≤ 1. In this case, without reduction in an electrolyte concentration in the electrolyte, the electrolyte may have a relatively low viscosity, a relatively good dynamic performance, and a relatively high conductivity.

Optionally, the cyclic organic solvent may include, but is not limited to, at least one of ethylene carbonate (EC), propylene carbonate (PC), dioxolane (DOL), or tetramethylene sulfone (TMS). The linear organic solvent includes at least one of dimethyl carbonate (DMC), diethyl carbonate (DEC), ethyl methyl carbonate (EMC), ethyl acetate (EA), methyl acetate (MA), propyl propionate (PP), ethyl butyrate (EB), ethyl propionate (EP), 1,2-dimethoxyethane (DME), diglyme (DG), or adiponitrile (AND). By means of using these substances as the solvent, the electrolyte formed may have a relatively good low-temperature performance and also have a relatively low viscosity, and thus the flow speed of the electrolyte may be increased, wetting of the positive-electrode active material layer and the negative-electrode active material layer by the electrolyte may be improved, and the stability of the SEI film may be enhanced.

Optionally, the electrolyte further includes a lithium salt. In the electrolyte, a molar content of the lithium salt ranges from 0.8 mol/L to 1.2 mol/L. Specifically, the molar content of the lithium salt may be, but is not limited to, 0.8 mol/L, 0.85 mol/L, 0.9 mol/L, 0.95 mol/L, 1.0 mol/L, 1.05 mol/L, 1.1 mol/L, 1.15 mol/L, 1.2 mol/L, etc. A too low concentration of the lithium salt may lead to a too low conductivity of an electrolyte obtained, thereby adversely affecting a charging and discharging speed and a capacitance of a cell manufactured. A too high concentration of the lithium salt may lead to a high cost for manufacturing the electrolyte and a too high viscosity of the electrolyte, thereby adversely affecting the flow speed of the electrolyte. In the case where the concentration of the lithium salt is excessively high, the lithium salt cannot be dissolved in the electrolyte, and the conductivity of the electrolyte may be decreased rather than increased.

Optionally, the lithium salt includes, but is not limited to, at least one of lithium hexafluorophosphate (LiPF6), lithium bis (fluorosulfonyl) imide (LiFSI), lithium perchlorate (LiClO4), lithium tetrafluoroborate (LiBF4), or lithium hexafluoroarsenate (LiAsF6).

In some embodiments, the electrolyte further includes an additive. The additive includes, but is not limited to, at least one of vinylene carbonate (VC), fluoroethylene carbonate (FEC), 1,3-propanesultone, ethylene sulfate, trimethylsilyl (tris) phosphate, tris borate, methylene methyl disulfonate, vinylethylene carbonate, lithium bisoxalate borate, lithium difluorooxalate borate, or lithium difluorophosphate. The additive is beneficial to formation of an electrode protection film (such as a passive film (e.g., an SEI film) for a negative electrode and a passive film (e.g., a chemical-electrochemical interface (CEI) film) for a positive electrode), thereby avoiding thermal runaway and over-charging, and thus flame retardancy, capacitance balance, and the like may be achieved. For example, with FEC, a dense and continuous SEI film may be effectively generated at a negative electrode made of graphite, and thus a cycling performance of the cell 100 may be improved.

Optionally, in the electrolyte, a mass fraction of the additive ranges from 1% to 8%. Specifically, in the electrolyte, the mass fraction of the additive may be, but is not limited to, 1%, 2%, 3%, 4%, 51%, 6%, 7%, 8%, etc. If the content of the additive is too low, the additive cannot significantly improve the performance of the cell 100. If the content of the additive is too high, too much lithium is consumed in each cycle during charging and discharging of the cell, so that a capacitance of the cell may attenuate quickly. Moreover, in the case where the content of the additive is relatively high, the viscosity of the electrolyte may be increased, the electrical performance may attenuate, and the cost may be increased.

Optionally, in the electrolyte, the mass fraction of the additive ranges from 2% to 5%, and thus it facilitates formation of the protective electrode film, and the viscosity of the electrolyte may not be excessively increased.

In some embodiments, a viscosity *µ_{T}* of the electrolyte satisfies: *µ_{T}* = (2.86 × 10⁻⁵ × *T*² - 0.0267 × *T* + 6.47) × *µ₀*, where *T* represents a thermodynamic temperature of the electrolyte, and *µ_{T}* represents a viscosity of the electrolyte at the thermodynamic temperature T. In the case where the conductivity of the electrolyte satisfies the formula, the conductivity of the electrolyte may be increased while the low viscosity can be satisfied, thereby increasing the charging and discharging speed of the cell 100.

In some embodiments, the cell 100 in embodiments of the disclosure further includes a housing 120, a negative-electrode cover plate 140, and a positive-electrode cover plate 160. The negative-electrode cover plate 140 is disposed at one of two opposite ends, and the positive-electrode cover plate 160 is disposed at the other of the two opposite ends. The housing 120, the negative-electrode cover plate 140, and the positive-electrode cover plate 160 jointly define a receiving cavity 101. The electrolyte, the positive electrode sheet 110, the separator 130, and the negative electrode sheet 150 are all received in the receiving cavity 101. The positive-electrode cover plate 160 is electrically connected to the positive electrode sheet 110 and electrically connects the positive electrode sheet 110 to a positive electrode of an electricity-consumption device. The negative-electrode cover plate 140 is electrically connected to the negative electrode sheet 150 and electrically connects the negative electrode sheet 150 to a negative electrode of the electricity-consumption device.

The cell 100 of the disclosure is further described below by way of specific embodiments.

### Embodiment 1

The electrolyte in the embodiment includes a lithium salt, a solvent, and an additive. The lithium salt includes LiPF6 with a molar concentration of 1 mol/L. The solvent is a mixed solvent of EC, EMC, and DMC, where a mass ratio of EC to EMC to DMC is 5:2:3. A mass ratio of a cyclic organic solvent to a linear organic solvent is 1:1 (i.e., *γ* = 1). The additive includes VC and FEC, where a mass fraction of VC is 3%, and a mass fraction of FEC is 1.5%. It is determined via measurement that the viscosity of the electrolyte at 25°C is 3.2 mPa.s and a conductivity σ of the electrolyte at 25°C is 13.56 ms/cm, where *k_{γ}* = -2.8, *k_{viscosity}* = 5.2, and *k_{conductivity}* = 0.28.

### Embodiment 2

The electrolyte in the embodiment includes a lithium salt, a solvent, and an additive. The lithium salt includes LiPF6 and LiFSI, where a molar ratio of LiPF6 to LiFSI is 9:1. A molar concentration of the lithium salt is 1 mol/L (i.e., a molar concentration of LiPF6 is 0.9 mol/L, and a molar concentration of LiFSI is 0.1 mol/L). The solvent is a mixed solvent of EC and EMC, where a mass ratio of EC to EMC is 2:8. A mass ratio of a cyclic organic solvent to a linear organic solvent is 2:8 (i.e., *γ* = 0.25). The additive includes VC and FEC, where a mass fraction of VC is 3% and a mass fraction of FEC is 1.5%. It is determined via measurement that the viscosity of the electrolyte at 25°C is 2.1 mPa.s and a conductivity σ of the electrolyte at 25°C is 10.44 ms/cm, where *k_{γ}* = -2.8, *k_{viscosity}* = 5.2, and *k_{conductivity}* = 0.31.

### Embodiment 3

The electrolyte in the embodiment includes a lithium salt, a solvent, and an additive. The lithium salt includes LiPF6 and LiFSI, where a molar ratio of LiPF6 to LiFSI is 9:1. A molar concentration of the lithium salt is 1 mol/L (i.e., a molar concentration of LiPF6 is 0.9 mol/L, and a molar concentration of LiFSI is 0.1 mol/L). The solvent is a mixed solvent of EC, EMC, and DMC, where a mass ratio of EC to EMC to DMC is 3:4:3. A mass ratio of a cyclic organic solvent to a linear organic solvent is 3:7 (i.e., *γ* = 0.4286). The additive includes VC and FEC, where a mass fraction of VC is 3%, and a mass fraction of FEC is 1.5%. It is determined via measurement that the viscosity of the electrolyte at 25°C is 2.4 mPa.s and a conductivity σ of the electrolyte at 25°C is 11.66 ms/cm, where *k_{γ}* = -2.8, *k_{viscosity}* = 5.2, and *k_{conductivity}* = 0.31.

### Comparative embodiment 1

The electrolyte in the embodiment includes a lithium salt, a solvent, and an additive. The lithium salt includes LiPF6 and LiFSI, where a molar ratio of LiPF6 to LiFSI is 9:1. A molar concentration of the lithium salt is 1 mol/L (i.e., a molar concentration of LiPF6 is 0.9 mol/L, and a molar concentration of LiFSI is 0.1 mol/L). The solvent is a mixed solvent of EC and DEC, where a mass ratio of EC to DEC is 7:3. A mass ratio of a cyclic organic solvent to a linear organic solvent is 7:3 (i.e., *γ* = 2.33). The additive includes VC and FEC, where a mass fraction of VC is 3%, and a mass fraction of FEC is 1.5%. It is determined via measurement that the viscosity of the electrolyte at 25°C is 4.8 mPa.s and a conductivity σ of the electrolyte at 25°C is 9.45 ms/cm, where *k_{γ} =* -2.8, *k_{viscosity}* = 5.2, and *k_{conductivity}* = 0.31.

It may be noted that in the foregoing embodiments 1 to 3 and comparative embodiment 1, conductivities are tested with a conductometer, viscosities are tested with an ubbelohde viscometer, and an environmental condition for testing includes a temperature of 25 ± 1°C and a humidity less than or equal to 2% (i.e., a drying-room condition).

### Cell manufacturing

A cell with the electrolyte in embodiment 1, a cell with the electrolyte in embodiment 2, a cell with the electrolyte in embodiment 3, and a cell with the electrolyte in the comparative embodiment are respectively manufactured as follows.
1) Manufacturing of a positive electrode sheet: lithium iron phosphate, a conductive agent (e.g., conductive carbon black, e.g., super P), and a binder (e.g., polyvinylidene fluoride (PVDF)) are mixed uniformly in an N-methyl pyrrolidone (NMP) solvent to prepare a positive-electrode slurry. The positive-electrode slurry has a solid content ranging from 58% to 67% and a viscosity ranging from 5000 mPa.s to 2700 mPa.s. The positive-electrode slurry is coated on a surface of an aluminium foil having a thickness of 13 µm, and the aluminium foil with the positive-electrode slurry is transferred to an oven for drying and then is subject to cold pressing and slitting to obtain a positive electrode sheet. A positive-electrode active material layer includes an active material (e.g., lithium iron phosphate) a weight content of which ranges from 95% to 98.5%, a conductive agent a weight content of which ranges from 0.3% to 0.8%, and a binder a weight content of which ranges from 1.6% to 2.7%. The positive-electrode active material layer has a porosity of 32.89%, a compact density of 2.4 g/cm3, a double-sided coating weight of 0.033 g/cm2, and a thickness of 150.5 µm.
2) Manufacturing of a negative electrode sheet: a negative-electrode active material (e.g., graphite), a conductive agent (e.g., conductive carbon black, e.g., super P), a thickener (e.g., carboxymethylcellulose sodium (CMC)), a binder, and a styrene butadiene rubber (SBR) are mixed uniformly in deionized water to prepare a negative-electrode slurry. The negative-electrode slurry has a solid content ranging from 49% to 58% and a viscosity ranging from 2000 mPa.s to 8000 mPa.s. The negative-electrode slurry is coated on a surface of a copper foil having a thickness of 6 µm, and then the copper foil with the negative-electrode slurry is transferred to an oven for drying and then is subject to cold pressing and slitting to obtain a negative electrode sheet. A negative-electrode active material layer includes an active material (e.g., graphite) a weight content of which ranges from 94.5% to 98.3%, a conductive agent (e.g., conductive carbon black) a weight content of which ranges from 0.4% to 1.2%, a thickener (e.g., CMC) a weight content of which ranges from 0.3% to 0.7%, a binder a weight content of which ranges from 0.9% to 1.7%, and an SBR a weight content of which ranges from 0.3% to 1.2%. The negative-electrode active material layer has a porosity of 32.28%, a compact density of 1.55 g/cm3, a double-sided coating weight of 0.016 g/cm2, and a thickness of 106.2 µm.
3) Manufacturing of a separator: a PP film having a thickness of 16 µm is used as a separator.
4) Manufacturing of lithium ion cells: the positive electrode sheet, the separator, and the negative electrode sheet are stacked in sequence, so that the separator is located between the positive electrode sheet and the negative electrode sheet to achieve separation. The positive electrode sheet, the separator, and the negative electrode sheet as a whole are wound to obtain a jelly roll. The jelly roll is placed in an outer packaging housing. After drying, the electrolytes in embodiments 1 to 3 and the electrolyte in comparative embodiment 1 are respectively injected. After vacuum packaging, standing, forming, and shaping, a lithium ion cell with the electrolyte in embodiment 1, a lithium ion cell with the electrolyte in embodiment 2, a lithium ion cell with the electrolyte in embodiment 3, and a lithium ion cell with the electrolyte in the comparative embodiment are obtained.

### Performance test

1) Wetting test: the electrolytes prepared in embodiments 1 to 3 and comparative embodiment 1 are respectively injected. The number of cycles required for wetting 50% of pores with the electrolyte in embodiment 1, the number of cycles required for wetting 50% of the pores with the electrolyte in embodiment 2, the number of cycles required for wetting 50% of the pores with the electrolyte in embodiment 3, and the number of cycles required for wetting 50% of the pores with the electrolyte in the comparative embodiment are respectively measured. The number of cycles required for wetting 60% of the pores with the electrolyte in embodiment 1, the number of cycles required for wetting 60% of the pores with the electrolyte in embodiment 2, the number of cycles required for wetting 60% of the pores with the electrolyte in embodiment 3, and the number of cycles required for wetting 60% of the pores with the electrolyte in the comparative embodiment are respectively measured. The number of cycles required for wetting 70% of the pores with the electrolyte in embodiment 1, the number of cycles required for wetting 70% of the pores with the electrolyte in embodiment 2, the number of cycles required for wetting 70% of the pores with the electrolyte in embodiment 3, and the number of cycles required for wetting 70% of the pores with the electrolyte in the comparative embodiment are respectively measured. The number of cycles required for wetting 80% of the pores with the electrolyte in embodiment 1, the number of cycles required for wetting 80% of the pores with the electrolyte in embodiment 2, the number of cycles required for wetting 80% of the pores with the electrolyte in embodiment 3, and the number of cycles required for wetting 80% of the pores with the electrolyte in the comparative embodiment are respectively measured. Detailed data is illustrated in Table 1.

Wetting by the electrolytes are tested as follows.
i) Manufacturing of a cell without an electrolyte: the positive electrode sheet, the negative electrode sheet, and the separator as a whole are wound by using a winder to form a jelly roll, and the jelly roll is put into and welded to a housing to form a cell without an electrolyte. In this test, a porosity of the positive electrode sheet is 32.89%, a porosity of the negative electrode sheet is 32.28%, and a porosity of the separator is 42%. Therefore, a porosity of the jelly roll obtained by winding = (a volume of the positive electrode sheet × 32.8% + a volume of the negative electrode sheet × 32.2% + a volume of the separator × 42%) ÷ a volume of the jelly roll = 33.3%, and a volume of pores of the jelly roll obtained is 107 cm³.
ii) Electrolyte injection: the manufactured cell without an electrolyte is placed in a liquid-injection machine, a certain amount of electrolyte is added into a liquid-injection cup (according to the porosity of the jelly roll, to wet 50% of the pores, it needs to place 107*50% = 53.5cm³ electrolyte in the liquid-injection cup, by analogy), and then injection of the electrolyte starts.
iii) Data collection: an amount of electrolyte remaining in the liquid-injection cup can be observed after one cycle of inj ection of the electrolyte, and then a second cycle starts until no electrolyte residue remains in the liquid-injection cup. The total number of cycles from the start of inj ection of the electrolyte to the cycle after which there is no electrolyte residue is recorded. By analogy, the number of cycles required for injection of different electrolytes is tested, where for different electrolytes, the same amount is injected.

**Table 1: tests for wetting performances of electrolytes in embodiments and an electrolyte in a comparative embodiment**

| Embodiment | the number of cycles required for wetting 50% of pores | the number of cycles required for wetting 60% of pores | the number of cycles required for wetting 70% of pores | the number of cycles required for wetting 80% of pores |
|---|---|---|---|---|
| Embodiment 1 | 3 | 4 | 6 | 8 |
| Embodiment 2 | 2 | 3 | 4 | 5 |
| Embodiment 3 | 2 | 3 | 4 | 6 |
| Comparative embodiment 1 | 5 | 7 | 9 | 13 |

It may be seen from the number of cycles required for wetting pores with the electrolytes in the embodiments and the comparative embodiment in Table 1 that, a less number of cycles can achieve the same wetting effect in the case where the electrolyte has a lower viscosity, which indicates that a lower viscosity of the electrolyte leads to a better wetting effect.

It may be seen from the test results in Table 1 that, a relationship among the speed of injection of the electrolyte in embodiment 1, the speed of injection of the electrolyte in embodiment 2, the speed of injection of the electrolyte in embodiment 3, and the speed of injection of the electrolyte in comparative embodiment 1 is as follows: the speed of injection of the electrolyte in embodiment 2> the speed of injection of the electrolyte in embodiment 3> the speed of injection of the electrolyte in embodiment 1> the speed of injection of the electrolyte in comparative embodiment 1, which indicates that a lower viscosity of the electrolyte leads to a higher speed of injection of the electrolyte and a less number of cycles for injection of the electrolyte.

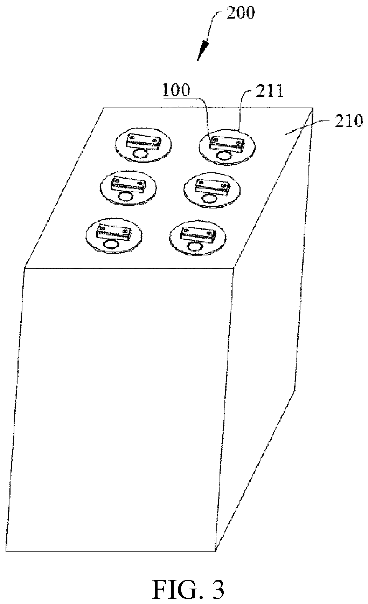

2) A constant-current charging and discharging test is conducted at a current density of 1C under a temperature 25°C, where the number of cycles and the capacitance retention rate of the cell 100 manufactured with the electrolyte in embodiment 1, the number of cycles and the capacitance retention rate of the cell 100 manufactured with the electrolyte in embodiment 2, the number of cycles and the capacitance retention rate of the cell 100 manufactured with the electrolyte in embodiment 3, and the number of cycles and the capacitance retention rate of the cell 100 manufactured with the electrolyte in the comparative embodiment are measured. Test results are illustrated in FIG. 3.

FIG. 3 is a schematic diagram illustrating cycling electrical performances of the cell 100 manufactured with the electrolyte in embodiment 1 of the disclosure, the cell 100 manufactured with the electrolyte in embodiment 2 of the disclosure, the cell 100 manufactured with the electrolyte in embodiment 3 of the disclosure, and the cell 100 manufactured with the electrolyte in the comparative embodiment. It may be seen from FIG. 3 that, since the electrolyte in embodiment 1 has a relatively high conductivity, the cell 100 manufactured with the electrolyte in embodiment 1 has relatively good cyclic stability. The electrolyte in comparative embodiment 1 has a relatively high viscosity and a relatively low conductivity, and thus a cycle capacitance of the cell 100 manufactured with the electrolyte in comparative embodiment 1 rapidly attenuates.

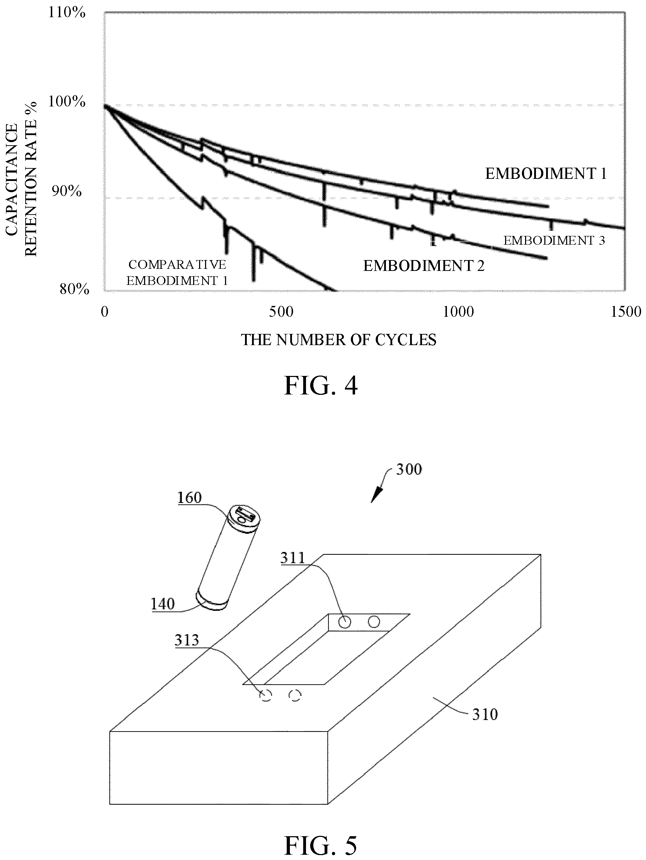

Referring to FIG. 4, a battery pack 200 is further provided in embodiments of the disclosure. The battery pack 200 includes a box 210 and multiple cells 100 in embodiments of the disclosure. The multiple cells 100 are received in the box 210 and electrically connected in series and/or in parallel. The term "a plurality of" or "multiple" means greater than or equal to two.

It may be understood that the multiple cells 100 of the battery pack 200 may be connected in parallel with each other, or connected in series with each other, or partially connected in parallel and partially connected in series, where a connection manner of the multiple cells 100 of the same battery pack 200 is not specifically limited in the disclosure.

It may be understood that the box 210 defines an accommodation cavity 211, and the multiple cells 100 are received in the accommodation cavity 211. In some embodiments, each accommodation cavity 211 receives one cell 100. In other embodiments, each accommodation cavity 211 receives multiple cells 100.

It may be understood that the battery pack 200 in the embodiment is only one form of the battery pack 200 to which the cell 100 is applied, which may not be understood as a limitation to the battery pack 200 provided in the disclosure and may not be understood as a limitation to the cell 100 provided in embodiments of the disclosure.

Referring to FIG. 5, an electricity-consumption device 300 is further provided in embodiments of the disclosure. The electricity-consumption device 300 includes an electricity-consumption device body 310 and the cell 100 in embodiments of the disclosure. The electricity-consumption device body 310 includes a device positive electrode 311 and a device negative electrode 313. The positive electrode sheet 110 of the cell 100 is electrically connected to the device positive electrode 311 of the electricity-consumption device body 310. The negative electrode sheet 150 of the cell 100 is electrically connected to the device negative electrode 313 of the electricity-consumption device body 310. The cell 100 is configured to power the electricity-consumption device body 310.

The electricity-consumption device 300 in embodiments of the disclosure may be, but is not limited to, a portable electronic device such as a mobile phone, a tablet computer, a notebook computer, a desktop computer, an intelligent toy, an intelligent bracelet, an intelligent watch, an electronic reader, a game machine, or a toy, or the electricity-consumption device 300 may be a large device such as an electromobile, an electric car, a ship, or a spacecraft.

It may be understood that the electricity-consumption device 300 in the embodiment is only one form of the electricity-consumption device 300 to which the cell 100 is applied, which may not be understood as a limitation to the electricity-consumption device 300 provided in the disclosure and may not be understood as a limitation to the cell 100 provided in embodiments of the disclosure.

The term "embodiment" or "implementation" referred to herein means that a particular feature, structure, or feature described in conjunction with the embodiment or implementation may be contained in at least one embodiment of the disclosure. The phrase appearing in various places in the specification does not necessarily refer to the same embodiment, nor does it refer to an independent or alternative embodiment that is mutually exclusive with other embodiments. It is explicitly and implicitly understood by those skilled in the art that an embodiment described herein may be combined with other embodiments. In addition, it can be further understood that, the features, structures, or characteristics described in embodiments of the disclosure may be combined arbitrarily without contradiction therebetween to form another embodiment that does not depart from the spirit and scope of the technical solutions of the disclosure.

Finally, it should be noted that the foregoing embodiments are merely intended to illustrate but not limit the technical solutions of the disclosure. Although the disclosure is described in detail with reference to the foregoing optimal embodiments, those of ordinary skill in the art should understand that modifications or equivalent replacements can be made to the technical solutions of the disclosure without departing from the spirit and scope of the technical solutions of the disclosure.

## Claims

1. A cell, comprising:
an electrolyte, wherein the electrolyte comprises a cyclic organic solvent and a linear organic solvent, and the electrolyte has a conductivity σ satisfying: *σ* = *k_{γ}* × *γ²* + *k_{viscosity}* × *µ₀* - *k_{conductivity},* wherein *γ* represents a mass ratio of the cyclic organic solvent to the linear organic solvent in the electrolyte, *k_{γ}* is a constant for *γ*, -3.1 ≤ *k_{γ}* ≤ -2.5, *k_{viscosity}* represents a constant for a viscosity of the electrolyte, 4.6 ≤ *k_{γ} <* 5.8, *k_{conductivity}* represents a correction coefficient for the conductivity of the electrolyte, 0.16 ≤ *k_{γ}* ≤ 0.39, and *µ₀* represents a viscosity of the electrolyte at 25°C;
a positive electrode sheet at least partially immersed in the electrolyte;
a separator located at a side of the positive electrode sheet and at least partially immersed in the electrolyte; and
a negative electrode sheet disposed at a side of the separator away from the positive electrode sheet and at least partially immersed in the electrolyte.

2. The cell of claim 1, wherein the viscosity *µ₀* of the electrolyte at 25°C satisfies: 1.9 mPa.s ≤ *µ₀* ≤ 4.5 mPa.s.

3. The cell of claim 1, wherein the viscosity*µ₀* of the electrolyte at 25°C satisfies: 1.9 mPa.s ≤ *µ₀* ≤ 2.4 mPa.s.

4. The cell of claim 1, wherein the mass ratio *γ* of the cyclic organic solvent to the linear organic solvent satisfies: 0.05 ≤ *γ* ≤ 2.

5. The cell of claim 1, wherein the mass ratio *γ* of the cyclic organic solvent to the linear organic solvent satisfies: 0.1 ≤ *γ* ≤ 1.

6. The cell of any one of claims 1 to 5, wherein a viscosity *µ_{T}* of the electrolyte satisfies: *µ_{T}* = (2.86 × 10⁻⁵ × *T*² - 0.0267 × *T +* 6.47) × *µ₀,* wherein *T* represents a thermodynamic temperature of the electrolyte, and *µ_{T}* represents a viscosity of the electrolyte at the thermodynamic temperature T.

7. The cell of any one of claims 1 to 5, wherein the cyclic organic solvent comprises at least one of ethylene carbonate (EC), propylene carbonate (PC), dioxolane (DOL), or tetramethylene sulfone (TMS); the linear organic solvent comprises at least one of dimethyl carbonate (DMC), diethyl carbonate (DEC), ethyl methyl carbonate (EMC), ethyl acetate (EA), methyl acetate (MA), propyl propionate (PP), ethyl butyrate (EB), ethyl propionate (EP), 1,2-dimethoxyethane (DME), diglyme (DG), or adiponitrile (AND); and the electrolyte further comprises a lithium salt and an additive, wherein the additive comprises at least one of vinylene carbonate (VC), fluoroethylene carbonate (FEC), 1,3-propanesultone, ethylene sulfate, trimethylsilyl (tris) phosphate, tris borate, methylene methyl disulfonate, vinylethylene carbonate, lithium bisoxalate borate, lithium difluorooxalate borate, or lithium difluorophosphate.

8. The cell of claim 7, wherein in the electrolyte, a molar content of the lithium salt ranges from 0.8 mol/L to 1.2 mol/L, and a mass fraction of the additive ranges from 1% to 8%.

9. A battery pack, comprising:
a box; and
a plurality of cells of any one of claims 1 to 8, the plurality of cells being received in the box and electrically connected in series and/or in parallel.

10. An electricity-consumption device, comprising:
an electricity-consumption device body comprising a device positive electrode and a device negative electrode; and
the cell of claim 9, wherein the positive electrode sheet of the cell is electrically connected to the device positive electrode of the electricity-consumption device body, the negative electrode sheet of the cell is electrically connected to the device negative electrode of the electricity-consumption device body, and the cell is configured to power the electricity-consumption device body.
